# EUROPÄISCHE PATENTSCHRIFT

(11) **EP 1 022 794 B1**
(45) Veröffentlichungstag und Bekanntmachung des Hinweises auf die Patenterteilung: **24.10.2001**
(21) Anmeldenummer: 99100976.2
(22) Anmeldetag: 21.01.1999
(51) Int. Cl.: H01M 4/84, H01M 4/73, B22D 25/04

(54) **Verfahren zur Herstellung von Bleigittern**
Process for making lead grids
Procédé de fabrication des grilles en plomb

(43) Veröffentlichungstag der Anmeldung: 26.07.2000
(73) Patentinhaber: Accumulatorenwerke Hoppecke Carl Zoellner & Sohn GmbH & Co. KG, 59914 Brilon (DE)
(72) Erfinder: Nitsche, Werner Dr., 58559 Lippstadt (DE); Stumpf, Hans Dr., 09238 Auerswalde (DE)
(74) Vertreter: Stenger, Watzke & Ring Patentanwälte

(56) Entgegenhaltungen:
- PATENT ABSTRACTS OF JAPAN vol. 004, no. 175 (E-036), 3. Dezember 1980 & JP 55 119360 A (MATSUSHITA ELECTRIC IND CO LTD), 13. September 1980
- PATENT ABSTRACTS OF JAPAN vol. 006, no. 021 (E-093), 6. Februar 1982 & JP 56 141177 A (MATSUSHITA ELECTRIC IND CO LTD), 4. November 1981
- PATENT ABSTRACTS OF JAPAN vol. 012, no. 065 (E-586), 27. Februar 1988 & JP 62 208552 A (MATSUSHITA ELECTRIC IND CO LTD), 12. September 1987
- PATENT ABSTRACTS OF JAPAN vol. 006, no. 021 (E-093), 6. Februar 1982 & JP 56 141176 A (JAPAN STORAGE BATTERY CO LTD), 4. November 1981

## Beschreibung

Die vorliegende Erfindung betrifft ein Verfahren zur Herstellung von Bleigittern zur Bleielektrodenbildung für die Akkumulatorenherstellung.

Herstellungsverfahren zur Herstellung von Bleigittern in kontinuierlicher Fertigung sind an sich bekannt und werden in großem Umfang intensiv eingesetzt. Es ist bekannt, Formteile durch kontinuierliche Verfahren herzustellen, wobei eine Ausbringdüse (Gießdüse) und die Form relativ zueinander bewegt werden, so daß die Form mittels der Ausbringdüse mit flüssigem Material gefüllt wird, das in dem Formbereich, der sich durch die Relativbewegung von der Ausbringdüse weg entfernt, zur Erstarrung kommt und gleichlaufend damit wieder frei stehender Formenhohlraum in den Bereich der Ausbringdüse zur kontinuierlichen Füllung bewegt wird. Die Anwendung dieser Technologie auf das Gießen von Gitterelementen aus Blei für die Herstellung von Bleielektroden bei der Akkumulatorenproduktion ist geläufig. Aufgrund des fließfähigen Zustandes neigt das über die Ausbringdüse in die Negativform eingebrachte Material dazu, sich schnell in der Negativform auszubreiten und insbesondere auch die Form gegenüber der Ausbringdüse voreilend zu füllen, so daß beim weiteren Formfüllprozeß infolge der Relativbewegung flüssiges Material schon erstarrtem angefügt wird, wobei es hier zur Ausbildung einer nicht material- und damit nicht kraftschlüssigen Trennstelle im Formteil kommt. Mit derartigen Mängeln behaftete Formteile sind für die weitere Verwendung nicht zu gebrauchen.

Es ist im Stand der Technik bekannt, zur Vermeidung unkontrolliert voreilenden Ausfliessens Dichtleisten im Bereich der Ausbringdüse anzuordnen, welche im wesentlichen in die Negativform hineinragen und ein unkontrolliert voreilendes Füllen mit Fließmaterial verhindern. Es kommt jedoch zwischen der Form und den Dichtleisten zu einer Reibpaarung, die zu hoher Materialbeanspruchung führt.

Es wurde vorgeschlagen, dem fließfähigen Material Richtungsänderungen durch Kröpfungen des Formteils aufzuzwingen, um somit ein Vorlaufen zu vermeiden.

Es sind auch Verfahren bekannt, wo im Düsenbereich Stickstoff (N₂) aufgeblasen wird, so daß keine Oxidhautbildung stattfindet. Dennoch hat sich der Bleivorfluß und sich dadurch ergebende Kaltverschweißung als äußerst nachteilig erwiesen. Darüber hinaus ergibt sich bei der Pastierung mit der aktiven Masse entlang der in den gegossenen Gittern gebildeten Korngrenzen, in denen gerichtete Kristalle stehen, durch die Säure eine Korngrenzenkorrosion, mit der Folge, daß das Gitter bricht. Es kann somit weder seine elektrische Leitungsfunktion noch die Trägerfunktion für die aktiven Massen erfüllen.

Man hat zwar versucht, durch sogenanntes Kaltwalzen die Korngrenzen zu brechen, so daß dort nicht mehr gerichtete Kristalle in der Oberfläche befindlich sind, jedoch läßt sich das Gefüge nicht entspannen und weist eine hohe innere Energie auf, so daß es im hohen Grad zu einer sogenannten Volumenkorrosion kommt. Es ist daher eine Mindestdicke erforderlich, die in den Bereich von 0,8 mm bis 1 mm geht.

Zur Vermeidung der Nachteile aufgrund von Kaltverschweißung und Korngrenzenkorrosion wurde auch schon vorgeschlagen, Gitter aus Streckmetallen zu bilden. Diese haben jedoch keine geschlossenen Rahmen und lassen sich nicht konturieren. Darüber hinaus ergibt sich ein erheblicher Materialausstoß bei der Plattenabtrennung.

Insgesamt lassen sich mit dem aus dem Stand der Technik bekannten Verfahren dünnere Gitter nicht ausbilden, ergeben sich hohe Ausschußraten durch Kaltverschweißung und hinsichtlich der geometrischen Ausbildung der Gitter und der einzelnen Gitterbereiche sind erheblich enge Grenzen gesetzt.

Ausgehend von diesem Stand der Technik liegt der vorliegenden Erfindung die **Aufgabe** zugrunde, ein Verfahren zur Herstellung von Bleigittern bereitzustellen, mit welchem sich einerseits die Ausschußraten reduzieren, Material sparen, die Volumenkorrosion weitestgehend beheben oder zumindest verringern und die geometrische Formenbildung erweitern lassen.

Zur technischen **Lösung** dieser Aufgabe wird mit der Erfindung vorgeschlagen ein Verfahren zur Herstellung von Bleigittern zur Bildung von Bleielektroden für die Akkumulatorenherstellung in kontinuierlicher Fertigung, wobei durch Gießen eines aushärtbaren bleihaltigen Materials Gitterrohlinge ausgebildet und anschließend durch Walzen unter Wärmezufuhr bei einer Temperatur unterhalb des Schmelzpunktes ausgeformt werden.

Mit dem erfindungsgemäßen Verfahren ergeben sich nunmehr eine erhebliche Zahl von Vorteilen. Zum einen läßt sich das Kristallgefüge unter gleichzeitiger Entspannnung und vollkommener Rekristallisation, also Abbau der inneren Energie, glätten, darüber hinaus lassen sich Kaltverschweißungen ausheilen und lassen sich in unterschiedlichen Gitterbereichen unterschiedliche Formen und Dicken ausbilden.

Das neuartige Verfahren geht davon aus, daß unter Wärmezufuhr im Bereich unterhalb des Schmelzpunktes ein Walzverfahren zur Ausformung eines Gitterohlings angewandt wird. Dies kann kontinuierlich erfolgen.

Die Materialmischung umfaßt üblicherwiese Blei, Aluminium, Kalzium, Zinn, zeitweilig auch Silber. Der Schmelzpunkt liegt bei etwa 300° Celsius. Ein vorzugsweiser Arbeitsbereich des erfindungsgemäßen Verfahrens liegt oberhalb der Rekristallisationstemperatur. Nach dem Walzvorgang liegt somit ein vollkommen rekristallisiertes Gefüge vor, was bei späterer Wärmebeeinflussung sich nicht mehr verändern wird.

Das erfindungsgemäße Verfahren läßt sich mehrstufig anwenden. Wird beispielsweise der Gitterrohling mit einer Ausgangsstärke von 2 mm ausgebildet, läßt er sich beispielsweise in zwei Stufen auf eine Dicke von 0,5 mm walzen, indem in jeder Stufe etwa 50% der Dicke abgewalzt werden. Dabei ergibt sich pro Stufe etwa eine Längenverdoppelung. Ein besonderer Vorteil des Verfahrens besteht auch darin, daß unterschiedliche Bereiche nunmehr unterschiedlich ausgeformt werden können. So kann beispielsweise die Fahne dicker als das Gitter ausgebildet werden.

Insgesamt ergibt sich nunmehr eine Formbildung in Abhängigkeit vom Materialfluß, so daß erstmalig auch dreidimensional nahezu beliebige Ausformungen von Bleigittern für Elektroden möglich sind.

Insgesamt wird mit der Erfindung ein sehr einfach anwendbares, äußerst wirtschaftliches und sehr effektives Verfahren zur Herstellung von Bleigittern für die Elektrodenfertigung bereitgestellt.

## Patentansprüche

1. Verfahren zur Herstellung von Bleigittern zur Bildung von Bleielektroden für die Akkumulatorenherstellung in kontinuierlicher Fertigung, wobei durch Gießen eines aushärtbaren bleihaltigen Materials Gitterrohlinge ausgebildet und anschließend durch Walzen unter Wärmezufuhr bei einer Temperatur unterhalb des Schmelzpunktes ausgeformt werden.

2. Verfahren nach Anspruch 1, **dadurch gekennzeichnet, daß** die Ausformung bei einer Temperatur oberhalb der Rekristallisationstemperatur > 100° Celsius erfolgt.

3. Verfahren nach einem der vorhergehenden Ansprüche, **dadurch gekennzeichnet, daß** die Ausformung bei etwa 250° Celsius erfolgt.

4. Verfahren nach einem der vorhergehenden Ansprüche, **dadurch gekennzeichnet, daß** mehrstufige Walzverfahren hintereinander durchlaufen werden.

5. Verfahren nach Anspruch 4, **dadurch gekennzeichnet, daß** zwei Walzverfahrensschritte hintereinander durchgeführt werden.

6. Verfahren nach einem der vorhergehenden Ansprüche, **dadurch gekennzeichnet, daß** der Gitterrohling mit einer Materialdicke von etwa 2 mm ausgebildet wird.

7. Verfahren nach einem der vorhergehenden Ansprüche, **dadurch gekennzeichnet, daß** einzelne Bereiche des Gitterrohlings hinsichtlich der Dicke in einem Walzschritt halbiert und hinsichtlich der Länge verdoppelt werden.

8. Verfahren nach einem der vorhergehenden Ansprüche, **dadurch gekennzeichnet, daß** der Ausformgrad in unterschiedlichen Bereichen des Gitterrohlings unterschiedlich gewählt wird.

9. Verfahren nach einem der vorhergehenden Ansprüche, **dadurch gekennzeichnet, daß** das Gitter auf eine Stärke von 0,5 mm abgewalzt wird.

## Claims

1. Method for producing lead grids for forming lead electrodes for a continuous manufacture of rechargeable batteries, grid blanks being formed by casting a hardenable lead-containing material, and are then shaped by rolling with heat being supplied, at a temperature which lies below the melting point.

2. Method according to Claim 1, **characterized in that** the shaping takes place at a temperature which is higher than the recrystallization temperature of > 100° Celsius.

3. Method according to one of the preceding claims, **characterized in that** the shaping is carried out at approximately 250° Celsius.

4. Method according to one of the preceding claims, **characterized in that** multistage rolling processes are passed through in succession.

5. Method according to Claim 4, **characterized in that** two rolling process steps are carried out in succession.

6. Method according to one of the preceding claims, **characterized in that** the grid blank is formed with a material thickness of approximately 2 mm.

7. Method according to one of the preceding claims, **characterized in that** in one rolling step individual areas of the grid blank are halved in terms of their thickness and doubled in terms of their length.

8. Method according to one of the preceding claims, **characterized in that** the extent of shaping is selected to be different in different areas of the grid blank.

9. Method according to one of the preceding claims, **characterized in that** the grid is rolled down to a thickness of 0.5 mm.

## Revendications

1. Procédé de fabrication en continu de grilles en plomb en vue de former des électrodes en plomb pour la fabrication d'accumulateurs, des ébauches de grilles étant confectionnées par coulée d'un matériau durcissable contenant du plomb et façonnées ensuite par laminage avec apport de chaleur à une température inférieure au point de fusion.

2. Procédé selon la revendication 1, **caractérisé en ce que** le façonnage a lieu à une température supérieure à la température de recristallisation > 100 °C.

3. Procédé selon une des revendications précédentes, **caractérisé en ce que** le façonnage a lieu à environ 250 °C.

4. Procédé selon une des revendications précédentes, **caractérisé en ce que** des procédés de laminage en plusieurs passes sont réalisés successivement.

5. Procédé selon la revendication 4, **caractérisé en ce que** deux étapes de procédé de laminage sont réalisées successivement.

6. Procédé selon une des revendications précédentes, **caractérisé en ce que** l'ébauche de grille est conçue avec une épaisseur de matière d'environ 2 mm.

7. Procédé selon une des revendications précédentes, **caractérisé en ce que**, en une étape de laminage, des zones individuelles de l'ébauche de grille sont divisées par deux en épaisseur et multipliées par deux en longueur.

8. Procédé selon une des revendications précédentes, **caractérisé en ce que** le degré de façonnage adopté dans diverses zones de l'ébauche de grille est différent.

9. Procédé selon une des revendications précédentes, **caractérisé en ce que** la grille est laminée à une épaisseur de 0,5 mm.
